# EUROPEAN PATENT SPECIFICATION

(11) **EP 3 170 850 B1**
(45) Date of publication and mention of the grant of the patent: **20.02.2019**
(21) Application number: 15835287.2
(22) Date of filing: 21.08.2015
(51) Int. Cl.: C08G 63/183, C08G 63/78, C08G 63/85

(54) **METHOD FOR PREPARING POLY(TRIMETHYLENE TEREPHTHALATE) WITH LOW BYPRODUCT CONTENT**
VERFAHREN ZUR HERSTELLUNG VON POLY(TRIMETHYLENTEREPHTHALAT) MIT GERINGEM NEBENPRODUKTGEHALT
PROCÉDÉ DE PRÉPARATION DE POLY(TÉRÉPHTALATE DE TRIMÉTHYLÈNE) À FAIBLE TENEUR EN SOUS-PRODUITS

(30) Priority: 26.08.2014 KR 20140111841
(43) Date of publication of application: 24.05.2017
(73) Proprietor: SK Chemicals Co., Ltd., Gyeonggi-do 13494 (KR)
(72) Inventor: MOON, Jung-Me, Seongnam-si Gyeonggi-do 13371 (KR); KIM, Tae-Young, Suwon-si Gyeonggi-do 16425 (KR)
(74) Representative: Regimbeau
(86) International application number: PCT/KR2015/008772
(87) International publication number: WO 2016/032174

(56) References cited:
- WO-A2-98/23662
- KR-A- 20010 110 785
- KR-A- 20010 112 407
- KR-A- 20070 058 617
- KR-A- 20080 079 687
- KR-A- 20140 021 755

## Description

### [TECHNICAL FIELD]

The present invention relates to a preparation method of poly(trimethylene terephthalate) containing low levels of toxic by-products such as acrolein.

### [BACKGROUND OF ART]

Poly(trimethylene terephthalate) is a polyester which can be prepared by esterification of 1,3-propanediol and terephthalic acid or dimethyl terephthalate, and polycondensation thereof.

Preparation methods of poly(trimethylene terephthalate) have already been published several times. For example, U.S. Patent No. 6,277,947 discloses a preparation method of poly(trimethylene terephthalate) by esterification, pre-condensation, and polycondensation of terephthalic acid and trimethylene glycol in the presence of a titanium compound, the catalyst. Here, at first, the esterification is carried out by at least two steps under the conditions of a mole ratio of trimethylene glycol to terephthalic acid of 1.25 to 2.5, a titanium content of 0 to 40 ppm, a temperature of 245 to 260 °C, and a pressure of 1 to 3.5 bar, and 35 to 110 ppm more titanium than the initial step is added thereto in one or more succeeding steps.

Further, U.S. Patent No. 6,353,062 discloses a continuous 3-vessel, 3-stage process for preparing poly(trimethylene terephthalate), wherein the first vessel is an esterification reactor for preparing a mixture of bis(3-hydroxypropyl)terephthalate and low molecular weight oligomers, the second vessel is a prepolymerizer, and the third reactor is the final polymerizer or finisher.

Furthermore, U.S. Patent Nos. 7,132,484 and 6,538,076 disclose a continuous 4-vessel, 4-stage process for preparing poly(trimethylene terephthalate), wherein the first vessel is an esterification reactor for preparing a mixture of bis(3-hydroxypropyl)terephthalate and low molecular weight oligomers, the second vessel is a flasher, the third vessel is a prepolymerizer, and the fourth reactor is the final polymerizer. In addition, U.S. Patent No. 5,599,900 discloses a method for eliminating by-products by bringing dihydroxy trimethylene terephthalate or a low molecular weight oligomer thereof which are obtained by esterification of terephthalic acid or dimethyl terephthalate and 1,3-propanediol in contact with an inert gas in the process of a polymerization reaction.

Meanwhile, by-products such as acrolein and allyl alcohol are formed in the preparation process of poly(trimethylene terephthalate). However, such by-products are highly toxic and thus it is preferable to minimize the formation of toxic by-products in the preparation process of poly(trimethylene terephthalate).

There have been several known methods for reducing toxic by-products such as acrolein in the process of preparing poly(trimethylene terephthalate). For example, U.S. Patent No. 7,381,787 discloses a method of adding a phosphorus compound; U.S. Patent No. 6,093,786 discloses a method of adding a hindered phenol and an aromatic organophosphite together; and U.S. Patent No. 7,223,471 discloses a method of adding polyfunctional alcohols, anhydrides of carboxylic acids, carboxylic acids and their salts, carbohydrates, and so on to the poly(trimethylene terephthalate) melt, for reducing toxic by-products. WO 98/23662 disloses a method of preparation of modified 1,3-propanediol-based polyesters such as polytrimethylene terphtalate, wherein such 1,3-propanediol-based polyesters are modified by incorporation of a hindered phenol as a terminal group to provide an endcapped polyester which has improved resistance to generation of acrolein when heated in air.

However, the preparation methods using separate additives for reducing by-products, like such known methods, not only complicate the preparation process but may also form other unexpected by-products, and particularly there is a problem of a decrease in the properties of the final polymer.

### [DETAILED DESCRIPTION OF THE INVENTION]

### [Technical Problem]

It is an aspect of the present invention to provide a method which can prepare poly(trimethylene terephthalate) containing low levels of toxic by-products such as acrolein without separate additives.

### [Technical Solution]

According to the present invention,
a preparation method of poly(trimethylene terephthalate), including the steps of:
forming an esterification product from a raw material mixture including 1,3-propanediol and terephthalic acid or dimethyl terephthalate, under a non-catalytic condition;
forming a prepolymer of poly(trimethylene terephthalate) by carrying out polycondensation of the esterification product, under a non-catalytic condition; and
forming poly(trimethylene terephthalate) by adding a catalyst thereto when the intrinsic viscosity of the reaction product including the prepolymer is 0.10 dl/g or more and the content of carboxyl end groups in the reaction product is 150 equivalents or less per 1×10⁶ g of the reaction product, and carrying out polycondensation of the prepolymer
   is provided.

Here, the esterification product may be continuously formed at the first esterification reactor and the second esterification reactor which are connected in series, and a gaseous by-product stream may be continuously evaporated and eliminated from each esterification reactor.

The raw material mixture may include 1.0 to 1.5 mol of 1,3-propanediol per 1 mol of terephthalic acid or dimethyl terephthalate.

The esterification product may include bis(3-hydroxypropyl)terephthalate, low molecular weight polyesters of 1,3-propanediol and terephthalic acid or dimethyl terephthalate, or a mixture thereof.

The formation of the esterification product may be carried out under a pressure of 1 to 4 kgf/cm² (i.e. 98066.5 to 392266 Pa) and a temperature of 230 to 260 °C.

Meanwhile, the polycondensation of the esterification product and the polycondensation of the prepolymer may be continuously or discontinuously carried out by using an apparatus including two or more polymerization reactors.

Specifically, the esterification product may be provided to the first polymerization reactor for preparing the prepolymer, and the prepolymer may be provided to the second polymerization reactor in company with the catalyst when the intrinsic viscosity of the reaction product including the prepolymer is 0.10 dl/g or more and the content of carboxyl end groups in the reaction product is 150 equivalents or less per 1×10⁶ g of the reaction product for preparing poly(trimethylene terephthalate).

The polycondensation of the esterification product may be carried out under a temperature of 230 to 270 °C and a pressure of 100 to 300 mmHg. i.e. 13332 to 39997 Pa.

Furthermore, the polycondensation of the prepolymer may be carried out under a temperature of 230 to 270 °C and a pressure of 10 to 200 mmHg. i.e. 1333 to 26664 Pa.

Meanwhile, the catalyst may be an organic or inorganic compound including one or more active metals selected from the group consisting of titanium and tin.

The catalyst may be added thereto so that 20 to 250 ppm of the active metals are included based on the weight of the final polymer.

Poly(trimethylene terephthalate) obtained by the polycondensation of the prepolymer may have an intrinsic viscosity of 0.8 to 1.2 dl/g or a weight average molecular weight of 70,000 to 130,000.

The final polymer prepared by such method may include 30 ppm or less of acrolein.

Hereinafter, the preparation method of poly(trimethylene terephthalate) according to the concrete embodiments of the present invention is explained in more detail.

Prior to this, technical terms in the present specification are only for mentioning arbitrary embodiments, and they are not intended to restrict the present invention unless there is a particular mention about them.

Further, singular expressions used herein may include plural expressions unless they are differently expressed contextually. In addition, the meaning of the term "include" used in the specification embodies specific characteristics, areas, essence, steps, actions, elements, and/or components, and does not exclude existence or addition of other specific characteristics, areas, essence, steps, actions, elements, components, and/or groups.

Terms including ordinal numbers such as 'first' or 'second' in the present specification can be used for explaining various components, but the components are not limited to or by the terms. Said terms are only used for distinguishing one component from other components. For example, the first element may be called the second element, and similarly, the second element may be called the first element within the scope of the present invention. The first element may be the same as or different from the second element.

Meanwhile, according to the result of research on the preparation method of poly(trimethylene terephthalate) of the present inventors, it is recognized that the formation of toxic by-products such as acrolein can be inhibited without separate additives and poly(trimethylene terephthalate) having excellent properties can be obtained with a lesser amount of catalyst when esterification of raw materials and pre-polycondensation are carried out under a non-catalytic condition, and the polycondensation is carried out after adding a catalyst thereto at the time of satisfying specific property conditions, in the processes of esterification, pre-polycondensation, and polycondensation using the raw materials.

According to one embodiment of the invention,
a preparation method of poly(trimethylene terephthalate) including the steps of:
forming an esterification product from a raw material mixture including 1,3-propanediol and terephthalic acid or dimethyl terephthalate, under a non-catalytic condition;
forming a prepolymer of poly(trimethylene terephthalate) by carrying out polycondensation of the esterification product, under a non-catalytic condition; and
forming poly(trimethylene terephthalate) by adding a catalyst thereto when the intrinsic viscosity of the reaction product including the prepolymer is 0.10 dl/g or more and the content of carboxyl end groups in the reaction product is 150 equivalents or less per 1×10⁶ g of the reaction product, and carrying out polycondensation of the prepolymer
   is provided.

That is, in the preparation method of poly(trimethylene terephthalate) (hereinafter, 'PTT') according to the embodiment of the invention, the esterification product formed from the raw materials under a non-catalytic condition is pre-condensed under a non-catalytic condition, and then the polycondensation is carried out by adding the catalyst thereto at the time of satisfying specific property conditions.

In such preparation method, unlike a general process of adding the catalyst to the raw materials before the esterification reaction, the polycondensation is carried out by adding the catalyst after the pre-polycondensation, and thus it becomes possible to prepare PTT having excellent properties with a lesser amount of catalyst while inhibiting the formation of toxic by-products such as acrolein, allyl alcohol, and the like.

Basically, PTT can be prepared by the polycondensation of the esterification product of 1,3-propanediol and terephthalic acid or the transesterification product of 1,3-propanediol and dimethyl terephthalate. Additionally, it may involve a solid-state polymerization process for obtaining PTT having a higher molecular weight.

PTT may be prepared by a continuous process or a batch process. The present invention suggests the continuous preparation method of PTT as one embodiment. However, it is obvious to a person skilled in the related art that the present invention is not limited to the continuous process and can be carried out by a batch process.

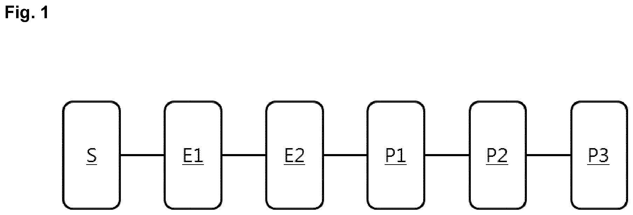

Meanwhile, as illustrated in Fig. 1, the preparation method of PTT according to one embodiment of the invention forms the esterification product under a non-catalytic condition after providing the raw materials prepared at the slurry melting tank (S) to the esterification reactor. At this time, the esterification may be continuously carried out through the first esterification reactor (E1) and the second esterification reactor (E2) connected in series.

Subsequently, the PTT prepolymer is formed by the polycondensation of the esterification product, and PTT can be obtained finally by the polycondensation of the prepolymer. At this time, the polycondensation may be continuously or discontinuously carried out by using an apparatus including two or more polymerization reactors.

For example, the esterification product is provided to the first polymerization reactor (P1) and forms the prepolymer by the polycondensation under a non-catalytic condition, and the prepolymer is mixed with the catalyst at the time of satisfying specific property conditions and provided to the second polymerization reactor (P2), and polycondensed. Further, as necessary, the stream discharged from the second polymerization reactor (P2) may be provided to the third polymerization reactor (P3) and additionally polycondensed.

Hereinafter, each step included in the preparation method of PTT according to one embodiment is explained.

### i) Formation of esterification product from raw materials under a non-catalytic condition

1,3-propanediol and terephthalic acid or dimethyl terephthalate may be used as the raw materials for preparing PTT.

The raw materials are mixed and melted in a slurry melting tank (S) and form a slurry phase raw material mixture. At this time, the raw material mixture may be maintained to include 1.0 to 1.5 mol of 1,3-propanediol per 1 mol of terephthalic acid or dimethyl terephthalate.

The raw material mixture prepared in the slurry melting tank (S) is transferred to the esterification reactor and forms the esterification product. Here, the formation of the esterification product is carried out under a non-catalytic condition, and preferably it may be carried out under a pressure of 1 to 4 kgf/cm² (i.e. 98066.5 to 392266 Pa) and a temperature of 230 to 260 °C.

According to the embodiment of the invention, the formation of the esterification product may be continuously carried out at the first esterification reactor (E1) and the second esterification reactor (E2) which are connected in series, and a gaseous by-product stream may be continuously evaporated and eliminated from each esterification reactor. It is preferable for preventing a reverse reaction to eliminate the gaseous by-products including water vapor in the main.

At the second esterification reactor (E2), it is preferable to discharge unreacted 1,3-propanediol out of the system. For non-restrictive example, it may be preferable for the process efficiency to transfer the reaction product of the first esterification reactor (E1) to the second esterification reactor (E2) when the intrinsic viscosity thereof reaches 1 or more.

According to the embodiment of the invention, the first esterification reactor (E1) may be operated under a pressure of 1 to 4 kgf/cm² (i.e. 98066.5 to 392266 Pa) and a temperature of 230 to 250 °C; and the second esterification reactor (E2) may be operated under a pressure of 1 to 4 kgf/cm² (i.e. 98066.5 to 392266 Pa) and a temperature of 240 to 255 °C. Particularly, it is advantageous to operate the second esterification reactor under normal pressure because the amount of unreacted 1,3-propanediol can apparently decrease and finally the content of by-products such as acrolein and allyl alcohol can be reduced.

The product including bis(3-hydroxypropyl)terephthalate, low molecular weight polyesters (for example, oligomers) of 1,3-propanediol and terephthalic acid or dimethyl terephthalate, or a mixture thereof can be obtained by the esterification performed in this way.

### ii) Pre-polycondensation under a non-catalytic condition

Meanwhile, the step of forming the prepolymer of PTT by polycondensation of the esterification product is carried out under a non-catalytic condition.

According to the embodiment of invention, the polycondensation of the esterification product and the polycondensation of the prepolymer obtained therefrom may be continuously or discontinuously carried out by using an apparatus including two or more polymerization reactors.

For example, in the case of the apparatus illustrated in Fig. 1, the esterification product is provided to the first polymerization reactor (P1) through a temperature control supply line and forms the prepolymer under a non-catalytic condition, and the prepolymer is provided with the catalyst to the second polymerization reactor (P2) at the time of satisfying specific property conditions, and forms PTT.

The polycondensation of the esterification product is preliminarily carried out at the first polymerization reactor (P1) and an excess of 1,3-propanediol is eliminated from the system, and long-chain molecules are formed and the intrinsic viscosity of the product increases gradually in this step. Here, a conventional apparatus such as a steam line equipped with a vacuum supplier, a spray condenser, and so on may be used for eliminating an excess of 1,3-propanediol from the system.

According to the embodiment of the invention, the polycondensation of the esterification product is carried out under a non-catalytic condition like the esterification. Preferably, the polycondensation of the esterification product may be carried out under a temperature of 230 to 270 °C, 240 to 260 °C, or 245 to 260 °C; and a pressure of 100 to 300 mmHg, 100 to 250 mmHg, or 150 to 250 mmHg i.e. respectively 13332 to 39997 Pa, 13332 to 33331 Pa, or 19998 to 33331 Pa.

As the polycondensation of the esterification product proceeds, the intrinsic viscosity of the reaction product including the prepolymer increases gradually and the content of the carboxyl end groups in the reaction product decreases gradually. The prepolymer of PTT is formed through the progress of the polycondensation, and the molecular weight of the prepolymer is not particularly limited at this time. Further, the reaction product is mixed with the catalyst and the polycondensation of the prepolymer is also carried out at the time of satisfying specific property conditions of the reaction product including the prepolymer.

### iii) Final polycondensation

According to the embodiment of the invention, the catalyst is added when the intrinsic viscosity of the reaction product including the prepolymer is 0.10 dl/g or more and the content of carboxyl end groups in the reaction product is 150 equivalents or less per 1×10⁶ g of the reaction product, and the step of forming PTT by the polycondensation of the prepolymer is carried out.

As disclosed above, the prepolymer of PTT is formed while the polycondensation of the esterification product proceeds under a non-catalytic condition, and the polycondensation of the esterification product is carried out until the properties of the reaction product including the prepolymer satisfy specific conditions. Further, PTT is formed by adding the catalyst thereto when the properties of the reaction product satisfy the conditions and also carrying out the polycondensation of the prepolymer in.

According to the embodiment of the invention, the catalyst may be added thereto when the intrinsic viscosity of the reaction product including the prepolymer is 0.10 dl/g or more and the content of carboxyl end groups in the reaction product is 150 equivalents or less per 1×10⁶ g of the reaction product. Preferably, the catalyst may be added thereto when the intrinsic viscosity of the reaction product including the prepolymer is 0.10 to 0.20 dl/g and the content of carboxyl end groups in the reaction product is 30 to 150 equivalents or less per 1×10⁶ g of the reaction product.

In this way, the preparation method of PTT according to the embodiment of the invention follows the polycondensation method by adding the catalyst after the preliminary polymerization, unlike a general process of adding the catalyst to the raw material mixture before the esterification reaction. Through this, the preparation method of PTT according to the present invention not only minimizes the formation of toxic by-products such as acrolein without a separate additive, but also makes it possible to prepare PTT having excellent properties with a lesser quantity of catalyst. Particularly, such effect can appear more markedly by adding the catalyst at the time of satisfying the conditions disclosed above, and the production efficiency of PTT can be improved by this.

Meanwhile, the polycondensation of the prepolymer may be carried out at the reactor where the polycondensation of the esterification product is carried out or at any other reactor. For example, in the case of the apparatus illustrated in Fig. 1, the polycondensation of the prepolymer may be carried out at the second polymerization reactor (P2) in the presence of a catalyst.

Here, the catalyst may be a conventional catalyst for polycondensation, and preferably it may be an organic or inorganic compound including one or more active metals selected from the group consisting of titanium and tin. For a non-restrictive example, the catalyst may be one or more compounds selected from the group consisting of tetraisopropyl titanate, tetrabutyl titanate, and dibutyltin oxide.

At this time, the catalyst may be added thereto so that 20 to 250 ppm, 50 to 250 ppm, or 50 to 200 ppm of the active metals are included based on the weight of the final polymer. That is, for obtaining the final polymer having a proper color while providing a suitable reaction rate, it is preferable to control the content of the catalyst within the range disclosed above.

The polycondensation of the prepolymer may be carried out under a temperature of 230 to 270 °C, 240 to 260 °C, or 245 to 260 °C, and a pressure of 10 to 200 mmHg, 10 to 150 mmHg, or 10 to 100 mmHg. i.e. respectively 1333 to 26664 Pa, 1333 to 19998 Pa, or 1333 to 13332 Pa.

Selectively, the stream discharged from the second polymerization reactor (P2) may be provided to the third polymerization reactor (P3) and polycondensed. It is advantageous for obtaining PTT of a high molecular weight to maximize mass transfer of unreacted 1,3-propanediol in the third polymerization reactor (P3). Therefore, it is preferable that the third polymerization reactor (P3) has a structure which can maximize the surface area of the polymer, for example, like a structure of a horizontal cylindrical vessel equipped with a stirrer. The third polymerization reactor (P3) may be operated under the condition of maintaining the temperature of 230 to 270 °C, 240 to 265 °C, or 250 to 260 °C and the pressure of 1 mmHg i.e. 133 Pa or less.

In this way, in the case of using the second polymerization reactor (P2) and the third polymerization reactor (P3), the residence time at each reactor may be controlled by considering the intrinsic viscosity and the molecular weight of the reaction product. For example, the residence time at the second polymerization reactor (P2) and the third polymerization reactor (P3) may be 30 to 90 min, respectively.

Meanwhile, PTT finally obtained by the processes disclosed above may have an intrinsic viscosity of 0.8 to 1.2 dl/g or a weight average molecular weight of 70,000 to 130,000. Further, said PTT may show a color L* value of 75 to 85 and a color b* value of 5 to 20.

Particularly, PTT prepared by the processes disclosed above may include low levels of acrolein, for example, 30 ppm or less, 27 ppm or less, 5 to 27 ppm, or 10 to 27 ppm based on the weight of the final polymer.

PTT that is continuously prepared through a series of processes disclosed above may be pelletized and obtained in a solid state, and can be directly supplied to conventional figuration processes such as fiber spinning, film forming, molding, and so on.

### [ADVANTAGEOUS EFFECTS]

According to the preparation method of the present invention, it is possible to continuously obtain poly(trimethylene terephthalate) containing low levels of toxic by-products such as acrolein without separate additives.

### [BRIEF DESCRIPTION OF THE DRAWINGS]

Fig. 1 schematically illustrates an apparatus which can be used in the preparation method of the embodiment of the invention.

### <Explanation of reference characters>

S: Slurry melting tank
E1, E2: Esterification reactor
P1, P2, P3: Polymerization reactor

### [DETAILED DESCRIPTION OF THE EMBODIMENTS]

Hereinafter, preferable examples are presented for understanding the present invention. However, the following examples are only for illustrating the present invention and the present invention is not limited to or by them.

### Example 1

A raw material mixture of a homogeneous slurry phase was prepared by mixing 1,3-propanediol and terephthalic acid as raw materials in a slurry melting tank (S). At this time, about 1.3 mol of 1,3-propanediol per 1 mol of terephthalic acid was included in the raw material mixture.

The prepared raw material mixture was transferred from the slurry melting tank (S) to the first esterification reactor (E1), and the esterification was carried out under a pressure of about 2 kgf/cm² (i.e. 196133 Pa) and a temperature of about 245 °C. As the esterification proceeded, a mixture of bis(3-hydroxypropyl)terephthalate and oligomers was formed.

The stream discharged from the first esterification reactor (E1) was transferred to the second esterification reactor (E2), and the esterification was continuously carried out under a temperature of about 255 °C and normal pressure. At this time, gaseous by-product streams respectively generated at the first esterification reactor (E1) and the second esterification reactor (E2) were continuously evaporated and eliminated.

Subsequently, the esterification product was transferred to the first polymerization reactor (P1), and the polycondensation reaction was carried out while maintaining a temperature of about 255 °C and a reduced pressure condition of 100 to 200 mmHg. i.e. 13332 to 26664 Pa.

The stream discharged from the first polymerization reactor (P1) was provided to the second polymerization reactor (P2) after adding a catalyst thereto. At this time, the intrinsic viscosity of the stream discharged from the first polymerization reactor (P1) was 0.12 dl/g and the content of carboxyl end groups in the stream was 120 equivalents per 1×10⁶ g of the reaction product. The catalyst added thereto was tetrabutyl titanate, and the content thereof was controlled so that about 180 ppm of titanium atoms were included therein based on the weight of the final polymer.

The polycondensation at the second polymerization reactor (P2) was carried out while maintaining a temperature of about 260 °C and a reduced pressure condition of 10 to 100 mmHg, i.e. 1333 to 13332 Pa, and the intrinsic viscosity of the reaction product increased gradually. The stream discharged from the second polymerization reactor (P2) was transferred to the third polymerization reactor (P3), and the polycondensation was carried out while maintaining a temperature of about 260 °C and a reduced pressure condition of 1 mmHg (i.e. 133 Pa) or less.

PTT (intrinsic viscosity: about 0.94 dl/g, weight average molecular weight: 98,900) was obtained by the above method, and the final polymer was obtained in a pelletized solid form.

### Example 2

PTT (intrinsic viscosity: about 0.92 dl/g, weight average molecular weight: 94,600) was obtained by the same method as in Example 1, except that the content of the catalyst added to the stream discharged from the first polymerization reactor (P1) was controlled so that about 150 ppm of titanium atoms were included therein based on the weight of the final polymer.

### Example 3

PTT (intrinsic viscosity: about 0.91 dl/g, weight average molecular weight: 91,600) was obtained by the same method as in Example 1, except that the content of the catalyst added to the stream discharged from the first polymerization reactor (P1) was controlled so that about 120 ppm of titanium atoms were included therein based on the weight of the final polymer.

### Example 4

PTT (intrinsic viscosity: about 0.93 dl/g, weight average molecular weight: 94,200) was obtained by the same method as in Example 1, except that the content of the catalyst added to the stream discharged from the first polymerization reactor (P1) was controlled so that about 80 ppm of titanium atoms were included therein based on the weight of the final polymer.

### Comparative Example 1

PTT (intrinsic viscosity: about 0.89 dl/g, weight average molecular weight: 88,500) was obtained by the same method as in Example 1, except that the raw material mixture was prepared by adding tetrabutyl titanate at the slurry melting tank (S) so that about 180 ppm of titanium atoms were included therein based on the weight of the final polymer, and the catalyst was not added to the stream discharged from the first polymerization reactor (P1).

### Comparative Example 2

PTT (intrinsic viscosity: about 0.85 dl/g, weight average molecular weight: 86,100) was obtained by the same method as in Example 1, except that the raw material mixture was prepared by adding tetrabutyl titanate at the slurry melting tank (S) so that about 150 ppm of titanium atoms were included therein based on the weight of the final polymer, and the catalyst was not added to the stream discharged from the first polymerization reactor (P1).

### Comparative Example 3

PTT (intrinsic viscosity: about 0.83 dl/g, weight average molecular weight: 83,200) was obtained by the same method as in Example 1, except that the raw material mixture was prepared by adding tetrabutyl titanate at the slurry melting tank (S) so that about 120 ppm of titanium atoms were included therein based on the weight of the final polymer, and the catalyst was not added to the stream discharged from the first polymerization reactor (P1).

### Comparative Example 4

PTT (intrinsic viscosity: about 0.94 dl/g, weight average molecular weight: 93,800) was obtained by the same method as in Example 1, except that the stream discharged from the first esterification reactor (E1) was transferred to the second esterification reactor (E2) after adding tetrabutyl titanate thereto so that about 180 ppm of titanium atoms were included therein based on the weight of the final polymer and then the esterification was carried out, and the catalyst was not added to the stream discharged from the first polymerization reactor (P1).

### Comparative Example 5

PTT (intrinsic viscosity: about 0.94 dl/g, weight average molecular weight: 96,100) was obtained by the same method as in Example 1, except that the stream discharged from the first esterification reactor (E1) was transferred to the second esterification reactor (E2) after adding tetrabutyl titanate thereto so that about 150 ppm of titanium atoms were included therein based on the weight of the final polymer and then the esterification was carried out, and the catalyst was not added to the stream discharged from the first polymerization reactor (P1).

### Comparative Example 6

PTT (intrinsic viscosity: about 0.89 dl/g, weight average molecular weight: 88,400) was obtained by the same method as in Example 1, except that the stream discharged from the first polymerization reactor (P1) was provided to the second polymerization reactor (P2) after adding the catalyst thereto when the intrinsic viscosity of the stream was 0.08 dl/g and the content of carboxyl end groups in the stream was 530 equivalents per 1×10⁶ g of the reaction product.

### Experimental Examples

The properties of PTT prepared by the examples and comparative examples were tested by the following methods, and the results are listed in Tables 1 to 3.

Further, the contents of acrolein and allyl alcohol were measured at 250°C in accordance with time passage for identifying the content of acrolein generated during the process, and the results are listed in the following Table 2.
1) The content of acrolein included in the esterification product (E2 discharge): 0.5 g of powdery specimen prepared by cryo-milling was collected and sealed in a glass bottle, and the content of acrolein was quantitatively analyzed through gas chromatography after heating the same at 150 °C for 30 min.
2) The content of acrolein generated at 250 °C: after heating 0.0020 g of a specimen prepared by cryo-milling at 250 °C for 10 to 30 min, the content of acrolein generated was quantitatively analyzed by a thermal desorption method through gas chromatography (a TENAX tube was used).
3) Intrinsic viscosity: after dissolving PTT in *o*-chlorophenol to have a concentration of 1.2 g/dl, the intrinsic viscosity was measured at 35 °C by using an Ubbelohde intrinsic viscometer.
4) Color: after crystallizing PTT in a hot-air oven at 150 °C for 1 h, color L* and color b* were respectively measured by using a color meter.
5) The content of carboxyl end groups included in the prepolymer (P1 discharge): after dissolving 0.1 g of a specimen in 10 ml of benzyl alcohol at 200 °C and adding a phenol red indicator thereto, the content of COOH end groups were quantified by titrating the same with 0.1 N-NaOH.

**[Table 1]**

| | Example 1 | Example 2 | Example 3 | Example 4 |
|---|---|---|---|---|
| IV(dl/g) at the time of adding catalyst | 0.12 | 0.12 | 0.12 | 0.12 |
| COOH content (eq./1×10⁶ g) at the time of adding catalyst | 120 | 120 | 120 | 120 |
| Ti input (ppm) | 180 | 150 | 120 | 80 |
| Acrolein content (ppm) in E2 reaction product | 21 | 15 | 8 | 4 |
| Remaining Ti content (ppm) in polymer | 110 | 98 | 74 | 49 |
| Acrolein content (ppm) in polymer | 27 | 19 | 14 | 11 |
| Color L* of polymer | 81 | 78 | 82 | 85 |
| Color b* of polymer | 17 | 12 | 11 | 7 |
| IV (dl/g) of polymer | 0.94 | 0.92 | 0.91 | 0.93 |

**[Table 2]**

| | Comparative Example 1 | Comparative Example 2 | Comparative Example 3 | Comparative Example 4 | Comparative Example 5 | Comparative Example 6 |
|---|---|---|---|---|---|---|
| IV(dl/g) at the time of adding catalyst | - | - | 0.09 | 0.09 | 0.09 | 0.08 |
| COOH content (eq./1 ×10⁶ g) at the time of adding catalyst | 7000 | 7000 | 220 | 430 | 440 | 530 |
| Ti input (ppm) | 180 | 150 | 120 | 180 | 150 | 180 |
| Acrolein content (ppm) in E2 reaction product | 27 | 24 | 23 | 24 | 21 | 25 |
| Remaining Ti content (ppm) in polymer | 125 | 101 | 75 | 120 | 95 | 125 |
| Acrolein content (ppm) in polymer | 40 | 37 | 32 | 32 | 28 | 35 |
| Color L* of polymer | 81 | 83 | 82 | 82 | 81 | 81 |
| Color b* of polymer | 16 | 13 | 11 | 11 | 11 | 11 |
| IV (dl/g) of polymer | 0.89 | 0.85 | 0.83 | 0.94 | 0.94 | 0.89 |

As shown in Tables 1 and 2, it is recognized that PTTs prepared by the methods of the examples show low levels, 27 ppm or less, of acrolein content, and can be polymerized by using a lesser amount of catalyst based on the same degree of polymerization. Particularly, by comparing the examples and comparative examples in which the contents of titanium included in the catalyst are equal, it is recognized that the content of acrolein included in PTT was markedly reduced in the methods of the examples.

**[Table 3]**

| | Acrolein generation (ppm) at 250 °C in accordance with time passage | | | Allyl alcohol generation (ppm) at 250 °C in accordance with time passage | | |
|---|---|---|---|---|---|---|
| | 10 min | 20 min | 30 min | 10 min | 20 min | 30 min |
| Example 1 | 27 | 30 | 35 | 44 | 72 | 97 |
| Example 2 | 24 | 28 | 32 | 40 | 69 | 92 |
| Example 3 | 17 | 22 | 23 | 35 | 67 | 79 |
| Example 4 | 12 | 16 | 17 | 31 | 61 | 71 |
| Comparative Example 4 | 30 | 34 | 40 | 51 | 80 | 105 |
| Comparative Example 5 | 26 | 28 | 31 | 39 | 70 | 91 |
| Comparative Example 6 | 28 | 32 | 38 | 46 | 76 | 101 |

As shown in Table 3, PTTs prepared by the methods of the examples show not only low levels, 27 ppm or less (10 min at 250 °C), of acrolein content but also low levels, 44 ppm or less (10 min at 250 °C), of allyl alcohol content. Further, it is recognized that acrolein and allyl alcohol were more slowly generated in the methods of the examples.

## Claims

1. A preparation method of poly(trimethylene terephthalate), including the steps of:
forming an esterification product from a raw material mixture including 1,3-propanediol and terephthalic acid or dimethyl terephthalate, under a non-catalytic condition;
forming a prepolymer of poly(trimethylene terephthalate) by carrying out polycondensation of the esterification product, under a non-catalytic condition; and
forming poly(trimethylene terephthalate) by adding a catalyst thereto when intrinsic viscosity of the reaction product including the prepolymer is 0.10 dl/g or more and a content of carboxyl end groups in the reaction product is 150 equivalents or less per 1×10⁶ g of the reaction product, and carrying out polycondensation of the prepolymer,
wherein the intrinsic viscosity of the reaction product including the prepolymer is measured at 35 °C using a Ubbelohde intrinsic viscometer after dissolving the reaction product at a concentration of 1.2 g/dl in o-chlorophenol,
wherein the content of carboxyl end groups in the reaction product is measured by dissolving 0.1 g of the above reaction product in 10 ml of benzyl alcohol at 200 °C, adding a phenol red indicator thereto, and titrating with 0.1 N NaOH.

2. The preparation method of poly(trimethylene terephthalate) according to Claim 1, wherein the esterification product is continuously formed at the first esterification reactor and the second esterification reactor which are connected in series, and a gaseous by-product stream is continuously evaporated and eliminated from each esterification reactor.

3. The preparation method of poly(trimethylene terephthalate) according to Claim 1, wherein the raw material mixture includes 1.0 to 1.5 mol of 1,3-propanediol per 1 mol of terephthalic acid or dimethyl terephthalate.

4. The preparation method of poly(trimethylene terephthalate) according to Claim 1, wherein the esterification product includes bis(3-hydroxypropyl)terephthalate, low molecular weight polyesters of 1,3-propanediol and terephthalic acid or dimethyl terephthalate, or a mixture thereof.

5. The preparation method of poly(trimethylene terephthalate) according to Claim 1, wherein the formation of the esterification product is carried out under a pressure of 98066.5 to 392266 Pa (1 to 4 kgf/cm²) and a temperature of 230 to 260 °C.

6. The preparation method of poly(trimethylene terephthalate) according to Claim 1, wherein the polycondensation of the esterification product and the polycondensation of the prepolymer are continuously or discontinuously carried out by using an apparatus including 2 or more polymerization reactors.

7. The preparation method of poly(trimethylene terephthalate) according to Claim 1, wherein:
the esterification product is provided to the first polymerization reactor for preparing the prepolymer; and
the prepolymer is provided to the second polymerization reactor in company with the catalyst when the intrinsic viscosity of the reaction product including the prepolymer is 0.10 dl/g or more and the content of carboxyl end groups in the reaction product is 150 equivalents or less per 1×10⁶ g of the reaction product and forms poly(trimethylene terephthalate).

8. The preparation method of poly(trimethylene terephthalate) according to Claim 1, wherein the polycondensation of the esterification product is carried out under a temperature of 230 to 270 °C and a pressure of 13332 to 39997 Pa (100 to 300 mmHg).

9. The preparation method of poly(trimethylene terephthalate) according to Claim 1, wherein the polycondensation of the prepolymer is carried out under a temperature of 230 to 270 °C and a pressure of 1333 to 26664 Pa (10 to 200 mmHg).

10. The preparation method of poly(trimethylene terephthalate) according to Claim 1, wherein the catalyst is an organic or inorganic compound including one or more active metals selected from the group consisting of titanium and tin.

11. The preparation method of poly(trimethylene terephthalate) according to Claim 1, wherein the catalyst is one or more compounds selected from the group consisting of tetraisopropyl titanate, tetrabutyl titanate, and dibutyltin oxide.

12. The preparation method of poly(trimethylene terephthalate) according to Claim 1, wherein the catalyst is added so that 20 to 250 ppm of the active metals are included based on the weight of the final polymer.

13. The preparation method of poly(trimethylene terephthalate) according to Claim 1, wherein poly(trimethylene terephthalate) obtained by the polycondensation of the prepolymer has an intrinsic viscosity of 0.8 to 1.2 dl/g or a weight average molecular weight of 70,000 to 130,000.

14. The preparation method of poly(trimethylene terephthalate) according to Claim 1, wherein poly(trimethylene terephthalate) prepared by the polycondensation of the prepolymer includes 30 ppm or less of acrolein,
wherein the content of acrolein included in the poly(trimethylene terephthalate) is measured by a method in which 0.5 g of powdery specimen prepared by cryo-milling of the poly(trimethylene terephthalate) is sealed in a glass bottle, heated at 150 °C for 30 minutes, and quantitatively analyzed by gas chromatography.

## Patentansprüche

1. Verfahren zur Herstellung von Poly(trimethylenterephthalat), das die folgenden Schritte umfasst:
Bilden eines Veresterungsproduktes aus einer Rohmaterialmischung, die 1,3-Propandiol und Terephthalsäure oder Dimethylterephthalat enthält, unter einer nicht-katalytischen Bedingung;
Bilden eines Präpolymers von Poly(trimethylenterephthalat) durch Ausführen einer Polykondensation des Veresterungsproduktes unter einer nicht-katalytischen Bedingung; und
Bilden von Poly(trimethylenterephthalat) durch Zusetzen eines Katalysators dazu, wenn die intrinsische Viskosität des Reaktionsproduktes einschließlich des Präpolymers 0,10 dl/g oder mehr beträgt und ein Gehalt an Carboxyl-Endgruppen im Reaktionsprodukt 150 Äquivalente oder weniger pro 1x10⁶ g des Reaktionsproduktes beträgt, und Ausführen der Polykondensation des Präpolymers,
wobei die intrinsische Viskosität des Reaktionsproduktes einschließlich des Präpolymers bei 35 °C unter Verwendung eines intrinsischen Ubbelohde-Viskosimeters nach dem Auflösen des Reaktionsproduktes bei einer Konzentration von 1,2 g/dl in o-Chlorophenol gemessen wird,
wobei der Gehalt an Carboxyl-Endgruppen im Reaktionsprodukt durch Auflösen von 0,1 g des obigen Reaktionsproduktes in 10 ml Benzylalkohol bei 200 °C, wobei ein Phenolrot-Indikator zugesetzt wird, und durch Titrieren mit 0,1 N NaOH gemessen wird.

2. Herstellungsverfahren von Poly(trimethylenterephthalat) nach Anspruch 1, wobei das Veresterungsprodukt im ersten Veresterungsreaktor und dem zweiten Veresterungsreaktor, die in Reihe geschaltet sind, kontinuierlich gebildet wird, und ein Strom von gasförmigem Nebenprodukt wird kontinuierlich verdampft und aus jedem Veresterungsreaktor entfernt.

3. Herstellungsverfahren von Poly(trimethylenterephthalat) nach Anspruch 1, wobei die Rohmaterialmischung 1,0 bis 1,5 mol von 1,3-Propandiol pro 1 mol Terephthalsäure oder Dimethylterephthalat enthält.

4. Herstellungsverfahren von Poly(trimethylenterephthalat) nach Anspruch 1, wobei das Veresterungsprodukt bis(3-Hydroxypropyl)terephthalat, niedermolekulargewichtige Polyester von 1,3-Propandiol und Terephthalsäure oder Dimethylterephthalat oder eine Mischung derselben enthält.

5. Herstellungsverfahren von Poly(trimethylenterephthalat) nach Anspruch 1, wobei die Bildung des Veresterungsproduktes unter einem Druck von 98066,5 bis 392266 Pa (1 bis 4 kgf/cm²) und bei einer Temperatur von 230 bis 260 °C ausgeführt wird.

6. Herstellungsverfahren von Poly(trimethylenterephthalat) nach Anspruch 1, wobei die Polykondensation des Veresterungsproduktes und die Polykondensation des Präpolymers kontinuierlich oder diskontinuierlich ausgeführt werden durch Verwendung einer Vorrichtung, die 2 oder mehr Polymerisationsreaktoren enthält.

7. Herstellungsverfahren von Poly(trimethylenterephthalat) nach Anspruch 1, wobei:
das Veresterungsprodukt dem ersten Polymerisationsreaktor zur Herstellung des Präpolymers bereitgestellt wird; und
das Präpolymer dem zweiten Polymerisationsreaktor gemeinsam mit dem Katalysator bereitgestellt wird, wenn die intrinsische Viskosität des Reaktionsproduktes einschließlich des Präpolymers 0,10 dl/g oder mehr und der Gehalt an Carboxyl-Endgruppen im Reaktionsprodukt 150 Äquivalente oder weniger pro 1x10⁶ g des Reaktionsproduktes beträgt und Poly(trimethylenterephthalat) bildet.

8. Herstellungsverfahren von Poly(trimethylenterephthalat) nach Anspruch 1, wobei die Polykondensation des Veresterungsproduktes bei einer Temperatur von 230 bis 270 °C und einem Druck von 13332 bis 39997 Pa (100 bis 300 mmHg) ausgeführt wird.

9. Herstellungsverfahren von Poly(trimethylenterephthalat) nach Anspruch 1, wobei die Polykondensation des Präpolymers bei einer Temperatur von 230 bis 270 °C und einem Druck von 1333 bis 26664 Pa (10 bis 200 mmHg) ausgeführt wird.

10. Herstellungsverfahren von Poly(trimethylenterephthalat) nach Anspruch 1, wobei der Katalysator eine organische oder anorganische Verbindung ist, einschließlich eines oder mehrerer aktiver Metalle, die aus der Gruppe bestehend aus Titan und Zinn ausgewählt werden.

11. Herstellungsverfahren von Poly(trimethylenterephthalat) nach Anspruch 1, wobei der Katalysator einer oder mehrere Verbindungen ist, die aus der Gruppe, bestehend aus Tetraisopropyltitanat, Tetrabutyltitanat und Dibutylzinnoxid, ausgewählt werden.

12. Herstellungsverfahren von Poly(trimethylenterephthalat) nach Anspruch 1, wobei der Katalysator so zugefügt wird, dass 20 bis 250 ppm der aktiven Metalle enthalten sind, bezogen auf das Gewicht des endgültigen Polymers.

13. Herstellungsverfahren von Poly(trimethylenterephthalat) nach Anspruch 1, wobei Poly(trimethylenterephthalat), das durch die Polykondensation des Präpolymers gewonnen wurde, eine intrinsische Viskosität von 0,8 bis 1,2 dl/g oder ein mittleres Molekulargewicht von 70.000 bis 130.000 hat.

14. Herstellungsverfahren von Poly(trimethylenterephthalat) nach Anspruch 1, wobei Poly(trimethylenterephthalat), das durch die Polykondensation des Präpolymers hergestellt wurde, 30 ppm oder weniger Acrolein enthält,
wobei der Gehalt an Acrolein, das im Poly(trimethylenterephthalat) enthalten ist, durch ein Verfahren gemessen wird, bei dem 0,5 g pulverförmige Probe, die durch Kryomahlen des Poly(trimethylenterephthalat) hergestellt wurde, in einer Glasflasche versiegelt, bei 150 °C über 30 Minuten erwärmt wird und quantitativ durch Gaschromatographie analysiert wird.

## Revendications

1. Procédé de préparation de poly(téréphtalate de triméthylène), comprenant les étapes suivantes :
formation d'un produit d'estérification à partir d'un mélange de matières premières comprenant du 1,3-propanediol et de l'acide téréphtalique ou du téréphtalate de diméthyle, dans des conditions non catalytiques ;
formation d'un prépolymère de poly(téréphtalate de triméthylène) par mise en oeuvre d'une polycondensation du produit d'estérification, dans des conditions non catalytiques ; et
formation de poly(téréphtalate de triméthylène) par addition d'un catalyseur à celui-ci quand la viscosité intrinsèque du produit réactionnel comprenant le prépolymère est de 0,10 dl/g ou plus et la teneur en groupes terminaux carboxyle dans le produit réactionnel est de 150 équivalents ou moins pour 1 x 10⁶ g du produit réactionnel, et mise en oeuvre d'une polycondensation du prépolymère,
dans lequel la viscosité intrinsèque du produit réactionnel comprenant le prépolymère est mesurée à 35 °C par utilisation d'un viscosimètre intrinsèque Ubbelohde après dissolution du produit réactionnel à une concentration de 1,2 g/dl dans de l'o-chlorophénol,
dans lequel la teneur en groupes terminaux carboxyle dans le produit réactionnel est mesurée par dissolution de 0,1 g du produit réactionnel ci-dessus dans 10 ml d'alcool benzylique à 200 °C, addition à celui-ci d'un indicateur au rouge de phénol, et titrage avec du NaOH 0,1 N.

2. Procédé de préparation de poly(téréphtalate de triméthylène) selon la revendication 1, dans lequel le produit d'estérification est formé en continu au niveau du premier réacteur d'estérification et du deuxième réacteur d'estérification qui sont connectés en série, et un courant de sous-produits gazeux est évaporé et éliminé en continu de chaque réacteur d'estérification.

3. Procédé de préparation de poly(téréphtalate de triméthylène) selon la revendication 1, dans lequel le mélange de matières premières contient 1,0 à 1,5 moles de 1,3-propanediol par mole d'acide téréphtalique ou de téréphtalate de diméthyle.

4. Procédé de préparation de poly(téréphtalate de triméthylène) selon la revendication 1, dans lequel le produit d'estérification contient du téréphtalate de bis(3-hydroxypropyle), des polyesters de 1,3-propanediol et d'acide téréphtalique ou de téréphtalate de diméthyle de faible masse moléculaire, ou un mélange de ceux-ci.

5. Procédé de préparation de poly(téréphtalate de triméthylène) selon la revendication 1, dans lequel la formation du produit d'estérification est effectuée sous une pression de 98066,5 à 392266 Pa (1 à 4 kgf/cm²) et à une température de 230 à 260 °C.

6. Procédé de préparation de poly(téréphtalate de triméthylène) selon la revendication 1, dans lequel la polycondensation du produit d'estérification et la polycondensation du prépolymère sont effectuées en continu ou en discontinu par utilisation d'un dispositif comprenant 2 ou plus de 2 réacteurs de polymérisation.

7. Procédé de préparation de poly(téréphtalate de triméthylène) selon la revendication 1, dans lequel :
le produit d'estérification est fourni au premier réacteur de polymérisation pour que le prépolymère soit préparé ; et
le prépolymère est fourni au deuxième réacteur de polymérisation conjointement avec le catalyseur quand la viscosité intrinsèque du produit réactionnel comprenant le prépolymère est de 0,10 dl/g ou plus et la teneur en groupes terminaux carboxyle dans le produit réactionnel est de 150 équivalents ou moins pour 1 x 10⁶ g du produit réactionnel, et forme le poly(téréphtalate de triméthylène).

8. Procédé de préparation de poly(téréphtalate de triméthylène) selon la revendication 1, dans lequel la polycondensation du produit d'estérification est effectuée à une température de 230 à 270 °C et sous une pression de 13332 à 39997 Pa (100 à 300 mmHg).

9. Procédé de préparation de poly(téréphtalate de triméthylène) selon la revendication 1, dans lequel la polycondensation du prépolymère est effectuée à une température de 230 à 270 °C et sous une pression de 1333 à 26664 Pa (10 à 200 mmHg).

10. Procédé de préparation de poly(téréphtalate de triméthylène) selon la revendication 1, dans lequel le catalyseur est un composé organique ou inorganique comprenant un ou plusieurs métaux actifs choisis dans l'ensemble constitué par le titane et l'étain.

11. Procédé de préparation de poly(téréphtalate de triméthylène) selon la revendication 1, dans lequel le catalyseur est un ou plusieurs composés choisis dans l'ensemble constitué par le titanate de tétraisopropyle, le titanate de tétrabutyle, et l'oxyde de dibutyl-étain.

12. Procédé de préparation de poly(téréphtalate de triméthylène) selon la revendication 1, dans lequel le catalyseur est ajouté de façon à ce que 20 à 250 ppm des métaux actifs soient incluses, par rapport au poids du polymère final.

13. Procédé de préparation de poly(téréphtalate de triméthylène) selon la revendication 1, dans lequel le poly(téréphtalate de triméthylène) obtenu par la polycondensation du prépolymère a une viscosité intrinsèque de 0,8 à 1,2 dl/g ou une masse moléculaire moyenne en masse de 70 000 à 130 000.

14. Procédé de préparation de poly(téréphtalate de triméthylène) selon la revendication 1, dans lequel le poly(téréphtalate de triméthylène) préparé par la polycondensation du prépolymère contient 30 ppm ou moins d'acroléine,
dans lequel la teneur en acroléine présente dans le poly(téréphtalate de triméthylène) est mesurée par un procédé dans lequel 0,5 g d'un échantillon en poudre préparé par cryo-broyage du poly(téréphtalate de triméthylène) est scellé dans une bouteille en verre, chauffé à 150 °C pendant 30 minutes, et analysé quantitativement par chromatographie gazeuse.
